## Europäisches Patentamt
## European Patent Office
## Office européen des brevets

(19)

(11) Numéro de publication : **0 025 372**
**B1**

(12) # FASCICULE DE BREVET EUROPÉEN

(45) Date de publication du fascicule du brevet :
01.06.83

(51) Int. Cl.³ : **B 62 D 11/18**

(21) Numéro de dépôt : **80401161.7**

(22) Date de dépôt : **07.08.80**

(54) **Groupe propulseur à transmissions hydrostatiques assurant la translation et la direction avec recyclage hydraulique de puissance en virage.**

(30) Priorité : **10.09.79 FR 7922518**

(43) Date de publication de la demande :
**18.03.81 Bulletin 81/11**

(45) Mention de la délivrance du brevet :
**01.06.83 Bulletin 83/22**

(84) Etats contractants désignés :
**CH DE GB LI SE**

(56) Documents cités :
**DE A 1 630 122
DE A 2 446 727
DE A 2 800 487
FR A 1 113 793
FR A 2 445 258
GB A 863 560
US A 3 081 647
US A 3 368 425
US A 3 575 066
US A 3 744 584
US A 3 774 401
US A 3 862 668
US A 4 019 596
US A 4 024 710
US A 4 086 767
INGENIEURS DE L'AUTOMOBILE, no. 1, janvier
1979 M.P. LEBOIME : « Direction hydrostatique à
variation continue », page 35
OLHYDRAULIK UND PNEUMATIK, vol. 18, no. 9,
septembre 1974 H. NIKOLAUS : « Hydrostatischer Lenk und Fahrantrieb für Kettenfahrzeuge », page 668**

(73) Titulaire : **ETAT-FRANCAIS représenté par le DELE-
GUE GENERAL POUR L'ARMEMENT
Bureau des Brevets et Inventions de la Délégation
Générale pour l'Armement 14, rue Saint-Dominique
F-75997 Paris Armées (FR)**

(72) Inventeur : **Marchand, Daniel
8 rue du Beau Soleil
F-49000 Angers (FR)**
Inventeur : **Morize, Alain
68, rue Albert Camus
F-49460 Montreuil-Juigne (FR)**

## Groupe propulseur à transmissions hydrostatiques assurant la translation et la direction avec recyclage hydraulique de puissance en virage

Le secteur technique de la présente invention est celui des transmissions pour véhicules chenillés ou à roues non directrices et plus particulièrement des transmissions hydrostatiques applicables à des chars de combat ou à des engins de travaux publics.

Dans ce domaine, des réalisations ont déjà été proposées. Ainsi, on a réalisé un véhicule à transmissions hydrostatiques indépendantes assurant la translation par vitesse identique sur les deux chenilles ou sur les deux groupes de roues et la direction par variation de la vitesse des chenilles ou des roues d'un côté par rapport à l'autre.

Ce type de réalisations nécessite une augmentation importante de la puissance apparente des éléments hydrauliques de façon à pouvoir transmettre en virage une puissance suffisante sur la chenille ou la roue nécessitant le plus de couple ou de vitesse, ceci afin d'assurer une bonne mobilité à l'engin.

Ce surdimensionnement grève le poids de la transmission et par-là même diminue le rendement en translation pure, pendant laquelle le surcroît de puissance nécessitant cette augmentation de puissance apparente n'est pas utilisé.

En outre l'encombrement important de ce type de transmissions accroît les difficultés d'implantation sur le véhicule.

D'autres types de véhicules, en particulier des véhicules de travaux publics à vitesse lente de translation, sont équipés d'une boîte de vitesses mécanique et d'une transmission hydrostatique de direction. Le transfert de la puissance en virage se fait alors par voie mécanique, la transmission de translation étant alors mécanique et discontinue.

Ce second type de réalisations, qui présente l'avantage d'un transfert de puissance par voie mécanique d'une chenille sur l'autre en virage, est néanmoins caractérisé par une mobilité inférieure à celle qui pourrait être obtenue par une transmission hydrostatique. En particulier, ce genre de dispositifs provoque une discontinuité de la transmission de puissance en virage, qui est due au passage des vitesses de la boîte mécanique. En outre, les engins comportant ce genre de dispositifs ont des rayons de virage qui sont directement fonction de la vitesse engagée, le virage s'effectuant par combinaison d'une vitesse de translation obtenue par une transmission incluant la boîte à vitesse mécanique, et d'un surcroît de vitesse apporté à une chenille par la transmission hydrostatique, accompagné d'une diminution de vitesse sur l'autre chenille.

Une autre solution a été proposée comprenant deux transmissions hydrostatiques de translation et une transmission hydrostatique de direction, le recyclage de puissance en virage s'effectuant par voie mécanique. On trouve décrite une telle solution dans la demande de brevet FR-A-2445258.

Cette solution intéressante conserve néanmoins l'inconvénient d'un poids important dû au grand nombre d'éléments mécaniques qu'elle nécessite.

La présente invention a donc pour but de supprimer les inconvénients précités en parvenant à réaliser une transmission continue de translation et de direction tout en assurant un recyclage par voies hydrauliques entre chenilles ou entre roues du véhicule. Ainsi l'invention vise à obtenir de bonnes performances tant en ligne droite qu'en virage sur un véhicule à chenilles ou à roues non directrices équipé intégralement de transmission hydrostatiques sans augmenter la puissance apparente des composants définis à partir des exigences inhérentes à la mobilité du véhicule en ligne droite.

L'invention a donc pour objet un groupe propulseur à transmissions hydrostatiques assurant la translation et la direction avec recyclage hydraulique de puissance en virage sur un véhicule lourd à chenilles ou à roues motrices non directrices, groupe comprenant deux transmissions hydrostatiques de translation agissant de part et d'autre du véhicule, et une transmission de direction (FR-A-2445258). Une caractéristique essentielle de l'invention consiste en ce que chaque transmission hydrostatique de translation soit constituée d'au moins une pompe à cylindrée variable (3a, 3b) alimentant, au moyen d'un circuit de distribution de fluide, chacune respectivement, au moins un premier moteur hydraulique et au moins un moteur-pompe à cylindrée variable montés respectivement de part et d'autre du véhicule, chaque premier moteur de chaque transmission de translation étant lié mécaniquement à chaque moteur-pompe de la transmission située du côté opposé sur le véhicule.

Le circuit de distribution de fluide de chaque transmission de translation comporte au moins un distributeur linéaire ou rotatif à deux positions, une première position permettant d'alimenter en fluide le moteur-pompe de ladite transmission, et une seconde position permettant d'alimenter le moteur-pompe de la transmission opposée.

Dans un mode de réalisation selon l'invention le distributeur de chaque transmission de translation comporte un système de commande permettant le passage de la première à la seconde position du distributeur lorsque la cylindrée du moteur-pompe de ladite transmission passe d'une cylindrée positive (fonctionnement en moteur) à une cylindrée négative (fonctionnement en pompe), la variation inverse de cylindrée entraînant le passage de la seconde à la première position du distributeur.

La transmission de direction est composée d'une pompe à cylindrée variable à double sens de débit aspirant du fluide dans la boucle haute pression en ligne droite de l'une des transmissions de translation devenant boucle basse pression en virage, cette transmission étant du côté intérieur, pour le débiter dans la boucle haute pression de la transmission de translation située du côté opposé du véhicule.

Dans tous les modes de réalisation de l'invention, la transmission de direction comporte un distributeur linéaire ou rotatif à deux positions pour inverser le sens de distribution du fluide débité par la pompe de ladite transmission lors du fonctionnement du véhicule en marche arrière.

Dans un mode particulier de réalisation selon l'invention chaque transmission de translation comporte un premier moteur et deux moteurs-pompes situés du côté du véhicule opposé au premier moteur, l'un des moteurs-pompes étant disposé en parallèle dans le circuit hydraulique sur le premier moteur, et l'autre moteur-pompe pouvant être couplé en parallèle sur le premier moteur de l'une ou l'autre des transmissions de translation au moyen d'un distributeur linéaire ou rotatif à deux positions, le passage de l'une à l'autre des positions étant commandé par le passage de la cylindrée positive à la cylindrée négative dudit moteur-pompe.

Selon un autre type de réalisation de l'invention, chaque transmission de translation comporte un premier moteur et deux moteurs-pompes situés du côté du véhicule opposé au premier moteur, chaque moteur-pompe pouvant être couplé en parallèle dans le circuit hydraulique sur le premier moteur de l'une ou l'autre des transmissions de translation par un distributeur linéaire ou rotatif à deux positions, le passage de l'une à l'autre des positions de chaque distributeur étant commandé par le passage de la cylindrée positive à la cylindrée négative du moteur-pompe correspondant.

Dans chacun des modes de réalisation évoqués ci-dessus les moteurs-pompes de chaque transmission sont liés entre eux et au premier moteur de l'autre transmission par un moyen mécanique.

En outre selon l'invention, les variations de cylindrée des pompes à cylindrée variable de chaque transmission de translation sont commandées par des régulations tachymétriques à partir de la vitesse de la génération auxquelles sont superposées des régulations à sommation algébrique de puissance par pression.

De plus, les cylindrées des moteurs-pompes à cylindrée variable sont commandées par des régulations tachymétriques à partir de leur vitesse d'entrainement par les barbotins auxquelles sont superposées pour le fonctionnement en pompe des moteurs-pompes, des régulations à sommation algébrique de puissance par pression.

L'invention sera mieux comprise et des particularités supplémentaires de l'invention seront plus longuement explicitées dans la description détaillée qui va suivre, donnée à titre d'exemple non limitatif de plusieurs modes de réalisation de l'invention. A cette description sont annexées plusieurs planches de dessins, parmi lesquelles :

la figure 1 représente un premier mode de réalisation dans lequel chaque transmission de translation ne comporte qu'un premier moteur moteur-pompe,

la figure 2 représente un deuxième mode de réalisation dans lequel chaque transmission de translation possède deux moteurs-pompes, chacun de ceux-ci pouvant être couplé dans le circuit hydraulique sur le premier moteur de l'une ou l'autre des transmissions de translation,

les figures 3, 4 et 5 représentent schématiquement trois configurations de fonctionnement du dispositif montré à la figure 2. Sur ces figures ont été supprimés, par simplification, la plupart des éléments mécaniques ainsi que les distributeurs, seul le circuit hydraulique résultant de la position de chaque distributeur étant figuré. Ainsi,

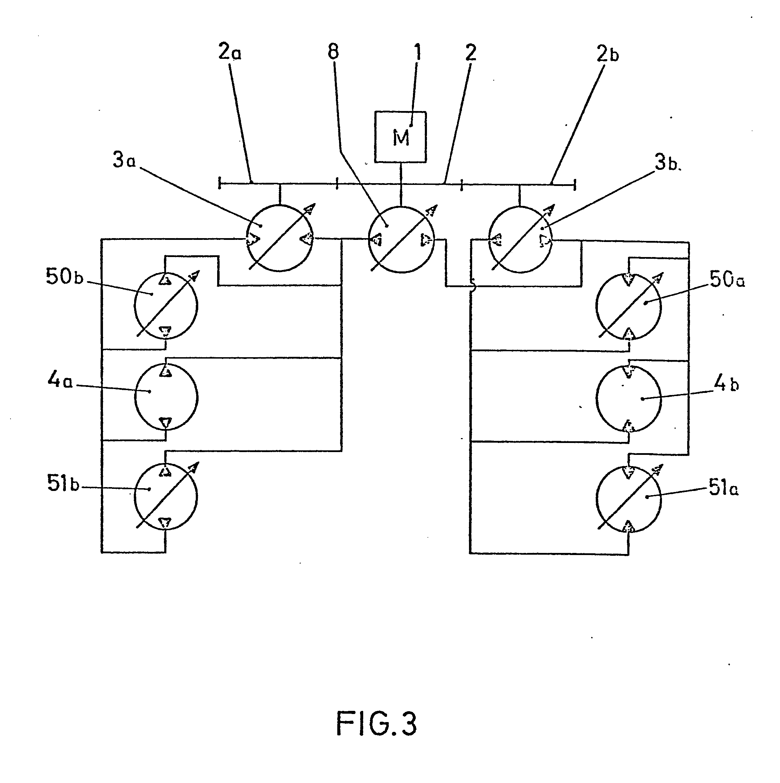

la figure 3 représente le dispositif lorsque les deux moteurs-pompes sont moteurs et qu'il n'y a donc pas de transfert direct de puissance d'un côté sur l'autre du véhicule ;

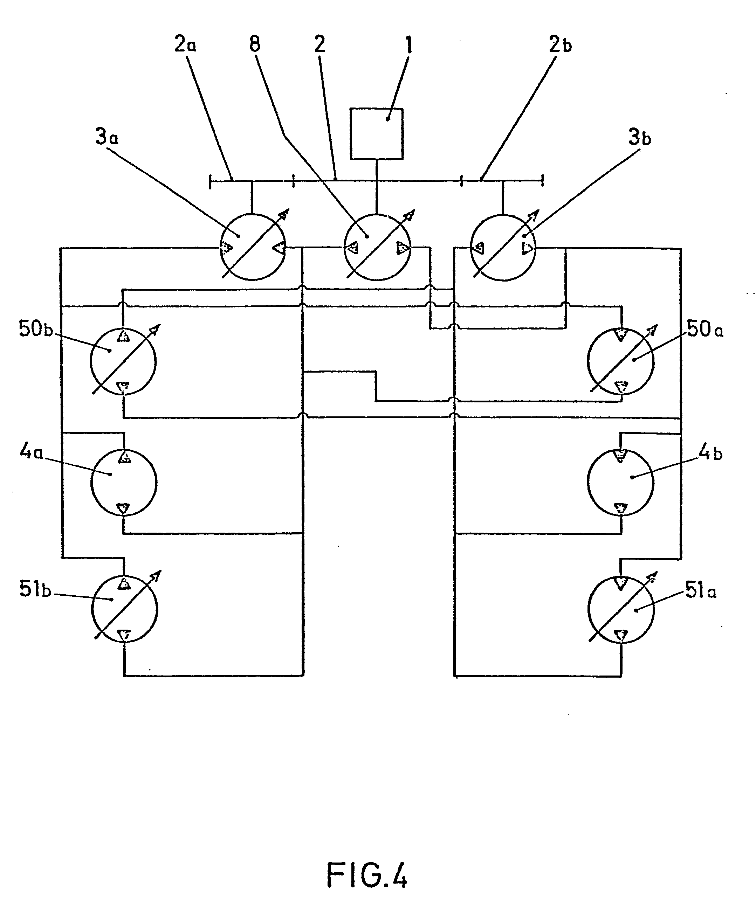

la figure 4 représente la configuration où un des moteurs-pompes de chaque transmission de translation fonctionne en pompe, l'autre moteur-pompe étant en fonctionnement moteur ;

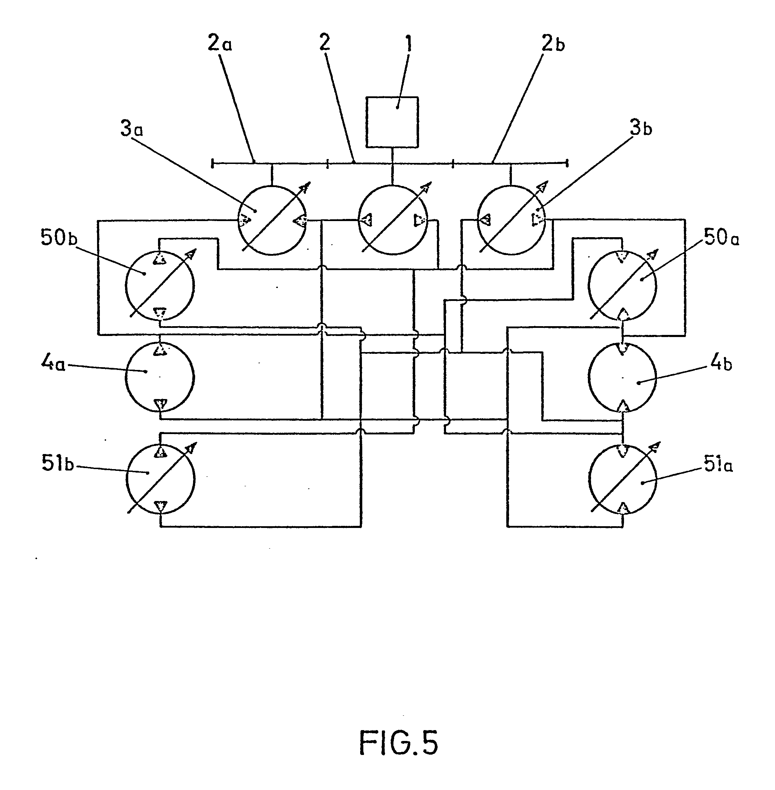

la figure 5 représente le dispositif lorsque chacun des moteurs-pompes est en fonctionnement moteur ;

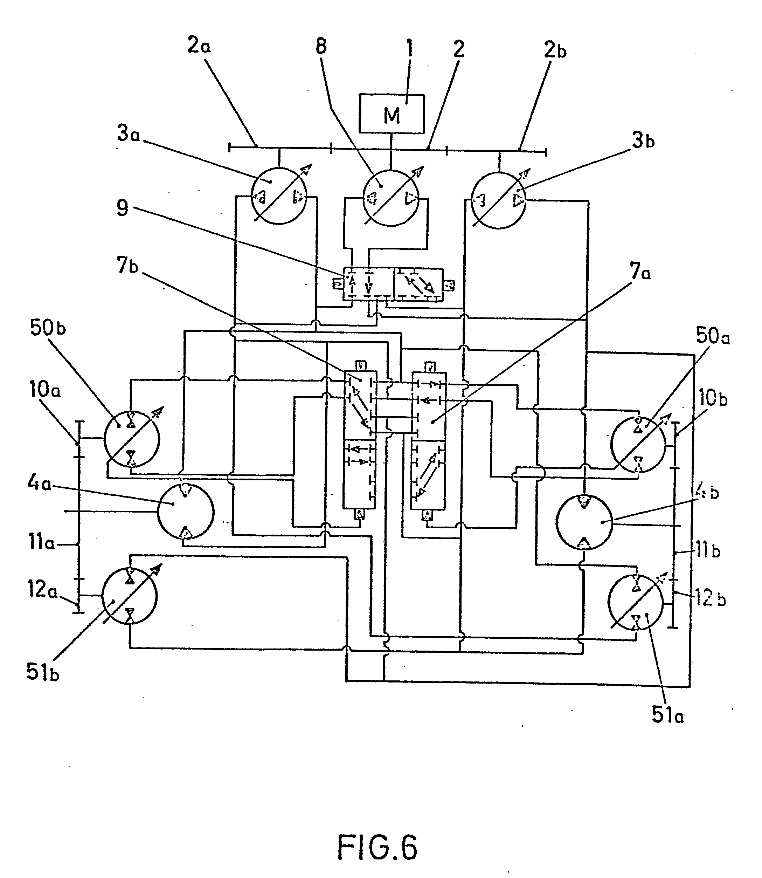

la figure 6 représente un troisième mode de réalisation de l'invention dans lequel chaque transmission de translation comporte un premier moteur et deux moteurs-pompes situés du côté du véhicule opposé au premier moteur et dont un seul des deux moteurs-pompes peut être mis en parallèle sur le premier moteur de chaque transmission de translation au moyen d'un distributeur.

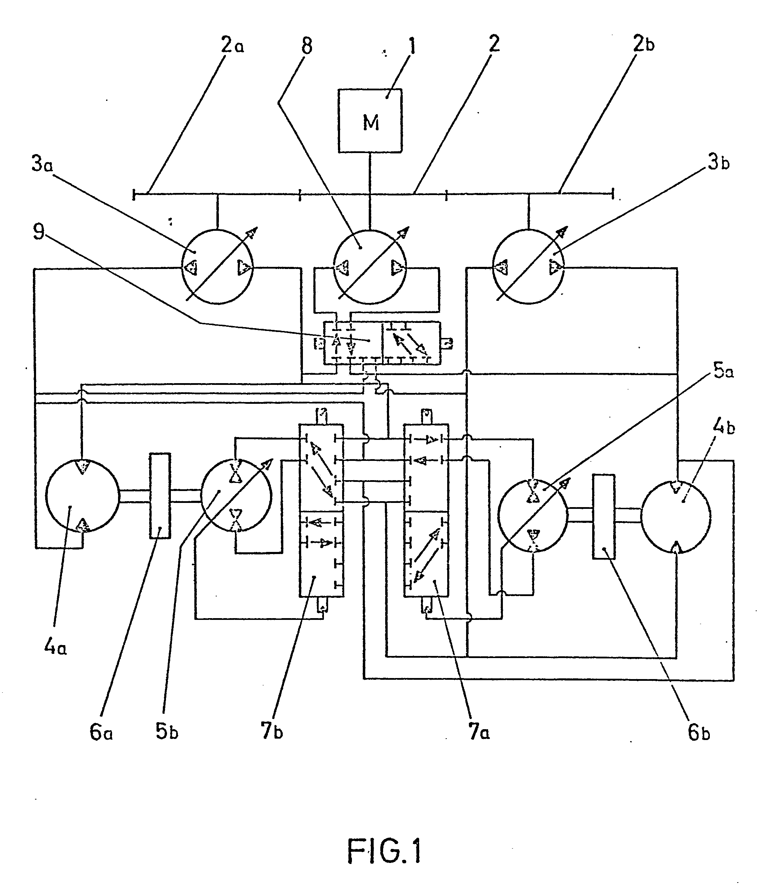

Le dispositif représenté à la figure 1, selon le premier mode de réalisation comprend donc deux transmissions hydrostatiques de translation entraînées par un moteur thermique 1 au moyen d'un train d'engrenages 2, 2a, 2b. Les arbres de sortie des engrenages 2a et 2b commandent respectivement la rotation de deux pompes à cylindrée variable 3a et 3b.

La pompe 3a (respectivement 3b) alimente en fluide un premier moteur 4a (respectivement 4b) et en parallèle hydrauliquement sur celui-ci un second moteur 5a (respectivement 5b). Le second moteur de chaque transmission est situé sur le véhicule du côté opposé à la transmission à laquelle il appartient et il est relié mécaniquement au premier moteur de la transmission opposée. Ainsi sur la figure 1, la transmission (pompe 3a, premier moteur 4a) située sur le côté gauche du véhicule (non représenté) voit son second moteur 5a situé sur le côté droit du véhicule et lié par un réducteur mécanique 6b au premier moteur 4b de la transmission de droite (pompe 3b, premier moteur 4b et second moteur 5b). De même le second moteur 5b de la deuxième transmission de translation est lié par un réducteur mécanique 6a au premier moteur 4a.

Le circuit hydraulique alimentant le moteur-pompe de chaque transmission comprend un distributeur (respectivement 7a et 7b) à deux positions, du type linéaire ou rotatif.

Le moteur-pompe à cylindrée variable est par exemple du type à pistons axiaux, auquel cas la variation de cylindrée peut être obtenue par la modification de l'inclinaison du plateau sur lequel s'appuient les pistons. Lorsque, par ce moyen, la cylindrée du moteur-pompe d'une des transmissions s'annule, un dispositif de commande autorise le changement de position du distributeur de ladite transmission.

Ainsi le distributeur 7a est commandé par le passage à zéro (ou au voisinage de zéro) de la cylindrée du moteur-pompe 5a tandis que le distributeur 7b est commandé par le moteur-pompe 5b.

Le passage à la deuxième position du distributeur (non représentée sur la figure 1) est obtenu lorsque le moteur-pompe correspondant passe d'un fonctionnement pompe au fonctionnement moteur. Le moteur-pompe 5a devenu moteur est alors relié hydrauliquement en parallèle sur le premier moteur 4b de la seconde transmission (3b, 4b) auquel il est relié mécaniquement par ailleurs au moyen du réducteur 6b. Il en est alors de même pour les moteurs 4a et 5b. On voit donc que, les valeurs de cylindrée des moteurs-pompes 5a et 5b étant identiques en translation, le passage d'une position à l'autre des deux distributeurs 7a et 7b se fera au même instant.

Le dispositif est complété par une pompe de direction 8 entraînée par le moteur 1 au moyen de la boîte de répartition contenant l'engrenage 2 et elle est reliée hydrauliquement aux branches haute pression de chacune des transmissions de translation. La pompe 8 est équipée d'un distributeur 9 à deux positions permettant l'inversion de sens de fluide pour exercer la fonction direction en marche arrière.

Au démarrage du véhicule, en ligne droite, les moteurs-pompes 5a et 5b sont à cylindrée maximale et fonctionnent en moteur. Les distributeurs 7a et 7b sont dans leur seconde position (non montrées sur la figure 1) et la pompe 3a (respectivement 3b) alimente les moteurs 4a et 5b (respectivement 4b et 5a).

Dans cette phase de fonctionnement, il n'y a donc pas transfert de la puissance d'un côté sur l'autre et le couple de giration est maximal. Une régulation tachymétrique de la cylindrée des pompes 3a et 3b et des moteurs-pompes 5a et 5b liée directement ou indirectement à l'augmentation de la vitesse de la génération de puissance permet l'augmentation de la vitesse du véhicule. Au moyen de cette régulation, on fait décroître la cylindrée des moteurs-pompes 5a et 5b jusqu'à l'annuler. Dès lors ils fonctionnent en pompe et les distributeurs 7a et 7b reprennent la position montrée sur la figure 1. On se trouve alors dans une phase où les pompes 3a et 5a (respectivement 3b et 5b) débitent en parallèle dans le moteur 4a (respectivement 4b) en passant, en ce qui concerne les pompes 5a et 5b de la cylindrée nulle à la cylindrée maximale nécessaire à l'obtention de la vitesse désirée.

En virage, aux faibles vitesses d'avancement du véhicule, lorsqu'en ligne droite les moteurs-pompes 5a et 5b fonctionnent en moteur, il n'y a pas de recyclage de puissance directement d'une chenille à l'autre. Le recyclage s'effectuera uniquement par les pompes principales 3a et 3b par l'intermédiaire de la boîte de répartition (2a, 2, 2b).

Aux vitesses d'avancement plus élevées, lorsqu'en ligne droite les moteurs-pompes 5a et 5b fonctionnent en pompe, et dans le cas par exemple d'un virage à gauche, le moteur 4a est entraîné par le barbotin gauche devenu menant. Il fonctionne alors en pompe et alimente les pompes 3a et 5a devenues moteurs. La pompe 3a devenue moteur entraîne mécaniquement par l'intermédiaire de la boîte de répartition les pompes 3b et 8 qui alimentent le moteur 4b. La pompe 5b alimente également le moteur 4b.

Il apparaît donc un recyclage de la puissance par deux voies différentes :
— une voie indirecte de 4a vers 4b par l'intermédiaire des éléments 3a, 2a, 2, 2b, 8 et 3b ;
— une voie directe de 4a vers 5a et de 5b vers 4b.

Il est à noter que la génération de puissance fournit en virage un complément d'énergie au barbotin extérieur.

L'effort disponible sur le barbotin extérieur croît alors de son minimum pour la cylindrée nulle des moteurs-pompes jusqu'à une valeur maximale pour la cylindrée maximale des moteurs-pompes.

La pompe de direction permet de transmettre partiellement ou en totalité la puissance non utilisée de la génération de puissance et de maintenir la vitesse initiale en apportant un complément de débit aux récepteurs extérieurs. En effet, elle aspire alors du fluide dans la boucle haute pression devenue en virage boucle basse pression du côté intérieur au virage, pour le refouler sur la boucle haute pression vers le récepteur situé du côté extérieur au virage.

Ce premier mode de réalisation de l'invention présente la caractéristique d'un couple de giration maximal à l'arrêt du véhicule pour tourner sur place ou au démarrage du véhicule, qui décroît ensuite jusqu'à la vitesse correspondant au point où les moteurs-pompes sont à cylindrée nulle pour croître à nouveau jusqu'à un maximum puis, compte tenu de l'effort important nécessaire à la translation à vitesse élevée, redécroître très faiblement jusqu'à la vitesse maximale du véhicule en ligne droite.

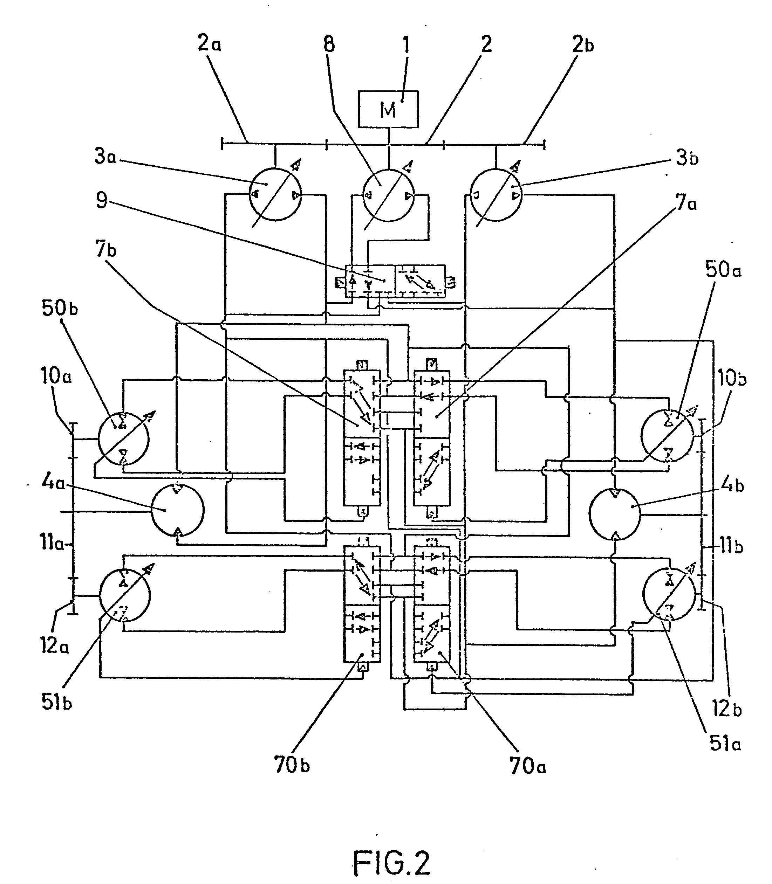

Dans le second mode de réalisation, montré à la figure 2, et qui représente une variante de réalisation du premier type de la figure 1, on a remplacé le moteur-pompe unique de chaque transmission de translation par deux moteurs-pompes 50a et 51a (respectivement 50b et 51b) identiques. Ce mode de réalisation a pour avantage de permettre un déphasage des variations des cylindrées des deux moteurs-pompes qui rend possible l'augmentation de la valeur minimale du couple de giration et l'obtention de celle-ci.

Ce mode de réalisation diffère de la première réalisation décrite en ce qu'il comporte, pour chaque transmission de translation, en sus des deux moteurs-pompes 50a et 51a (respectivement 50b et 51b), deux distributeurs 7a et 70a (respectivement 7b et 70b) dont le changement de position est commandé par le passage à cylindrée nulle des moteurs-pompes respectifs précités. De plus, les deux moteurs-pompes de chaque transmission sont reliés entre eux et liés au premier moteur de la transmission opposée par un moyen mécanique constitué par un train d'engrenages 10a, 11a, 12a (respectivement 10b, 11b, 12b).

De la même façon que dans le premier mode de réalisation, on utilise des régulations tachymétriques pour commander les cylindrées des moteurs-pompes hydrauliques 50a, 50b, 51a et 51b à partir de leur vitesse d'entraînement de façon à conserver en virage les mêmes cylindrées, évitant la chute de vitesse du véhicule qu'entraînerait l'augmentation de la cylindrée des moteurs-pompes liés à une régulation par pression.

Dans la suite du texte pour la commodité de l'explication, on utilisera les références des organes sans leurs indices littéraux lorsque le fonctionnement décrit sera valable sur un côté ou sur l'autre du véhicule. Ainsi « le moteur-pompe 50 côté intérieur » signifiera le moteur-pompe 50a si le virage est effectué à droite ou le moteur-pompe 50b si le virage est effectué à gauche.

En ce qui concerne le fonctionnement, deux cas sont à considérer :

— aux basses vitesses, les moteurs-pompes 50 et 51 sont moteurs en ligne droite ; en virage, ils deviennent pompes en ce qui concerne le côté intérieur alors qu'ils restent moteurs sur le côté extérieur ;

— aux hautes vitesses, les moteurs-pompes 50 et 51 sont en fonctionnement pompe ; en virage, ceux situés du côté intérieur restent pompes tandis que les moteurs-pompes côté extérieur deviennent moteurs. Les moteurs-pompes 50 et 51 intérieures au virage alimentent partiellement le moteur 4 côté extérieur tandis que la pompe 3 du côté intérieur au virage est devenue moteur ; le moteur 4 intérieur devenu pompe alimente partiellement les moteurs-pompes 50 et 51 extérieurs ainsi que la pompe 3 intérieure devenue moteur en virage. Il y a donc un transfert de puissance direct par les pompes 3 et 8 et les moteurs-pompes 50 et 51 et un transfert direct d'un barbotin à l'autre des moteurs-pompes 50 et 51 intérieurs au moteur 4 extérieur et du moteur 4 intérieur aux moteurs-pompes 50 et 51 extérieurs.

L'organisation et les régulations des transmissions adoptées conduisent à considérer les trois phases de fonctionnement en virage :

— A basse vitesse et à couple de giration maximal, la cylindrée du premier moteur varie de sa cylindrée maximale à sa cylindrée nulle :

Les deux moteurs-pompes 50 et 51 de chaque transmission sont moteurs, il n'y a pas de transfert direct de la puissance d'une chenille à l'autre.

En virage, les moteurs-pompes 50 et 51 du côté de la chenille extérieure restent moteurs alors que ceux du côté de la chenille intérieure deviennent pompes, les pressions s'inversent dans le circuit de la transmission du côté de la chenille intérieure ; la pompe d'alimentation 3 du côté intérieur devient moteur et transmet une partie de sa puissance à la pompe 3 de l'autre transmission (côté extérieur) ainsi qu'à la pompe de direction 8 ; le complément de la puissance est alors donné par le moteur thermique. Le schéma des transmissions est alors celui figuré à la figure 3.

— Aux vitesses intermédiaires, le moteur-pompe 50 fonctionne en pompe, le moteur-pompe 51 en moteur :

Il y a transfert de la puissance directement d'une chenille à l'autre uniquement par le moteur 50.

En virage, le moteur semi-rapide 4 et le deuxième moteur-pompe rapide 51 restent moteurs du côté extérieur, ils sont alimentés par la pompe 3 du côté extérieur ; le moteur-pompe côté extérieur qui fonctionne en pompe est relié à l'autre pompe 3 et devient moteur en virage. Le moteur semi-rapide 4 et le deuxième moteur-pompe rapide 51 du côté intérieur deviennent pompes et débitent dans la pompe d'alimentation 3 intérieure devenue moteur. Le premier moteur-pompe rapide 50 du côté intérieur relié à la pompe extérieure 3 reste pompe. On a alors un ensemble moteur sur le barbotin extérieur et un ensemble pompe sur le barbotin intérieur. Le schéma des transmissions en virage est alors celui de la figure 4.

— Aux hautes vitesses les deux moteurs-pompes 50 et 51 fonctionnent en pompe :

Le transfert de la puissance directement d'une chenille à l'autre est réalisé par les deux moteurs-pompes rapides 50 et 51.

En virage, les deux moteurs-pompes rapides 50 et 51 du côté extérieur, reliés au moteur du côté intérieur deviennent moteurs. Le moteur du côté extérieur reste moteur alors que celui du côté intérieur devient pompe. Les moteurs-pompes rapides 50 et 51 du côté intérieur restent pompes. Sur le côté extérieur, tous les éléments hydrauliques sont moteurs ; sur le côté intérieur, ils sont pompes. Le schéma des transmissions en virage est alors celui de la figure 5.

Le troisième mode de réalisation représenté à la figure 6 constitue une variante du second mode montré à la figure 2.

Le second moteur-pompe 51 de chaque transmission de translation est couplé hydrauliquement en permanence au moteur hydraulique à cylindrée fixe 4 monté sur le barbotin opposé alors que le premier moteur-pompe 50 comporte sur son circuit le distributeur de recyclage 7 décrit précédemment qui ne permet le recyclage de la puissance que lorsque le premier moteur-pompe devient pompe.

Un tel dispositif permet alors, au cours du fonctionnement :

— de diminuer la cylindrée des moteurs-pompes rapides 50 ayant un distributeur, jusqu'à leur cylindrée nulle.

— à partir de ce point de fonctionnement, diminuer la cylindrée du moteur-pompe 51 jusqu'à 0 tout en augmentant la cylindrée du premier moteur-pompe 50 qui fonctionne alors en pompe.

Il est alors possible ou non de faire correspondre les points : cylindrée nulle du moteur-pompe 51 et cylindrée maximale en pompe du moteur-pompe 50.

On augmente enfin la cylindrée du premier moteur-pompe 50 jusqu'au point de fonctionnement maximal en pompe et éventuellement celle du second moteur pompe 51 si elle n'a pas atteint son maximum dans la deuxième phase.

L'avantage d'un tel dispositif réside dans le fait que l'effort disponible sur le barbotin extérieur, minimal au démarrage, augmente ainsi pendant la première phase, est à peu près constant pendant la seconde phase et croît pendant la dernière phase.

Dans tous les types de réalisations selon l'invention précitée, on pourra avantageusement utiliser pour les pompes 3 des transmissions de translation, des régulations tachymétriques faisant varier leur cylindrée proportionnellement aux variations de vitesse de la génération de puissance de façon à leur faire débiter un débit maximal à la vitesse maximale de la génération de puissance. La superposition d'une régulation de puissance par pression (à sommation algébrique de puissance) permettra l'utilisation de ces pompes à cylindrée réduite pour des pressions élevées à leur vitesse maximale de fonctionnement et donc à la puissance maximale de la génération de puissance. Ce point de fonctionnement correspond à une utilisation du véhicule à vitesse réduite et à fort couple nécessitant une pression importante.

La régulation par pression à sommation algébrique de puissance permet en outre de conserver dans la phase de virage des valeurs de cylindrée importantes ce qui facilite le recyclage indirect de puissance par les pompes.

La pompe de direction, à cylindrée nulle en translation, n'est pas munie de régulations mais la valeur de sa cylindrée sera commandée directement par l'opérateur pour accomplir les fonctions de virage.

La cylindrée maximale des moteurs permet d'obtenir le couple maximal à vitesse réduite du véhicule. Simultanément à l'augmentation de la cylindrée des pompes 3 il conviendra de réduire la cylindrée des éléments 50 et 51 en fonctionnement moteur jusqu'à la cylindrée nulle puis d'accroître leurs cylindrées en fonctionnement pompe jusqu'à leurs maxima, ceux-ci étant atteints simultanément aux maxima des cylindrées des pompes 3. Cette variation conjointe de cylindrée des divers éléments permettra le passage par variation continue de la vitesse minimale du véhicule à sa vitesse maximale et de son couple maximal à son couple minimal. Ces variations seront commandées par des régulations tachymétriques, soit à partir de la vitesse de rotation de la génération de puissance, soit de façon préférentielle à partir de la vitesse des barbotins du véhicule.

L'invention dans chacun de ses modes de réalisation présente pour autre avantage le fait qu'en virage, le transfert de la puissance par voies hydrauliques remplace avantageusement le transfert mécanique en réduisant la masse de l'ensemble, en simplifiant l'implantation des composants et en protégeant le dispositif des pointes éventuelles de couple, par l'existence des soupapes montées de façon connue sur les circuits des transmissions hydrostatiques.

En outre, l'ensemble des dispositifs, transmissions de translation avec transfert de puissance hydraulique direct et pompe de direction, objet de l'invention, permet de bénéficier de l'excellente mobilité et de la continuité qu'apporte la transmission hydrostatique tant en ligne droite qu'en virage. En outre, il permet les couples de giration nécessaires au bon comportement en virage en fonction de la vitesse d'avancement du véhicule et le maintien de cette vitesse en virage.

L'invention s'applique donc avec intérêt aux véhicules tels que les engins de travaux publics, ou les chars de combat pour lesquels on souhaite obtenir une grande mobilité tant en ligne droite qu'en virage sans augmentation excessive de la masse du véhicule.

## Revendications

1. Groupe propulseur à transmissions hydrostatiques assurant la translation et la direction avec recyclage hydraulique de puissance en virage sur un véhicule lourd à chenilles ou à roues motrices non directrices ; groupe comprenant deux transmissions hydrostatiques de translation (3a, 4a et 3b, 4b) agissant de part et d'autre du véhicule, et une transmission de direction (8), caractérisé en ce que chaque transmission hydrostatique de translation est constituée d'au moins une pompe à cylindrée variable (3a, 3b) alimentant, au moyen d'un circuit de distribution de fluide, chacune respectivement au moins un premier moteur hydraulique (4a, 4b) et au moins un moteur-pompe à cylindrée variable (5a, 5b) montés respectivement de part et d'autre du véhicule, chaque premier moteur (respectivement 4a, 4b) de chaque transmission de translation étant lié mécaniquement à chaque moteur-pompe (respectivement 5b, 5a) de la transmission située du côté opposé sur le véhicule.

2. Groupe propulseur selon la revendication 1, caractérisé en ce que la boucle haute pression du circuit de distribution de fluide de chaque transmission de translation comporte au moins un distributeur (7a, 7b) linéaire ou rotatif à deux positions, une première position permettant d'alimenter en fluide le moteur-pompe (5a ou 5b) de ladite transmission (3a, 4a ou 3b, 4b) et une seconde position permettant d'alimenter le moteur-pompe (5b ou 5a) de la transmission opposée.

3. Groupe propulseur selon la revendication 2, caractérisé en ce que le distributeur (7a ou 7b) de chaque transmission de translation comporte un système de commande permettant le passage de la première à la seconde position du distributeur lorsque la cylindrée du moteur-pompe de ladite transmission passe d'une cylindrée positive (fonctionnement en moteur) à une cylindrée négative, (fonctionnement en pompe) la variation inverse de cylindrée entraînant le passage de la seconde à la première position du distributeur.

4. Groupe propulseur selon l'une quelconque des revendications 1 à 3 caractérisé en ce que la transmission de direction est composée d'une pompe à cylindrée variable (8) à double sens de débit aspirant du fluide dans la boucle haute pression en ligne droite de l'une des transmissions de translation (3a, 4a, 5a, ou 3b, 4b, 5b) devenant boucle basse pression en virage cette transmission étant du côté intérieur pour le débiter dans la boucle haute pression de la transmission de translation située du côté opposé du véhicule.

5. Groupe propulseur selon la revendication 4 caractérisé en ce que la transmission de direction comporte un distributeur linéaire ou rotatif (9) à deux positions pour inverser le sens de distribution du fluide débité par la pompe de ladite transmission lors du fonctionnement du véhicule en marche arrière.

6. Groupe propulseur selon l'une quelconque des revendications 1 à 5, caractérisé en ce que chaque transmission de translation comporte un premier moteur (respectivement 4a ou 4b) et deux moteurs-pompes (respectivement 50a, 51a ou 50b, 51b) situés du côté du véhicule opposé au premier moteur, l'un (51a, 51b) des moteurs-pompes étant disposé en parallèle dans le circuit hydraulique sur le premier moteur, et l'autre moteur-pompe (50a, 50b) pouvant être couplé en parallèle sur le premier moteur de l'une ou l'autre des transmissions de translation au moyen d'un distributeur (7a, 7b) linéaire ou rotatif à deux positions, le passage de l'une à l'autre des positions étant commandé par le passage de la cylindrée positive à la cylindrée négative dudit moteur-pompe (50a, 50b).

7. Groupe propulseur selon l'une quelconque des revendications 1 à 5, caractérisé en ce que chaque transmission de translation comporte un premier moteur (4a, 4b) et deux moteurs-pompes (50a, 51a et 50b, 51b) situés du côté du véhicule opposé au premier moteur, chaque moteur-pompes pouvant être couplé en parallèle dans le circuit hydraulique sur le premier moteur de l'une ou l'autre des transmissions de translation par un distributeur (7a, 7b ou 70a, 70b) linéaire ou rotatif à deux positions, le passage de l'une à l'autre des positions de chaque distributeur étant commandé par le passage de la cylindrée positive à la cylindrée négative du moteur-pompe correspondant.

8. Groupe propulseur selon l'une quelconque des revendications 6 ou 7 caractérisé en ce que les moteurs-pompes de chaque transmission sont liés entre eux et au premier moteur de l'autre transmission par un moyen mécanique.

9. Groupe propulseur selon l'une quelconque des revendications 1 à 8 caractérisé en ce que les variations de cylindrée des pompes à cylindrée variable de chaque transmission de translation sont commandées par des régulations tachymétriques à partir de la vitesse de la génération auxquelles sont superposées des régulations à sommation algébrique de puissance par pression.

10. Groupe propulseur selon l'une quelconque des revendications 1 à 9 caractérisé en ce que les cylindrées des moteurs-pompes à cylindrée variable sont commandées par des régulations tachymétriques à partir de leur vitesse d'entraînement par les barbotins auxquelles sont superposées, pour le fonctionnement en pompe des moteurs-pompes, des régulations à sommation algébrique de puissance par pression.

**Claims**

1. Hydrostatic drive type propulsion unit producing the travel-drive and steering with hydraulic power recycling on turns, on a heavy crawler-type or non-steering drivewheel type vehicle ; unit comprising two travel-drive hydrostatic drives (3a, 4a and 3b, 4b) operating on either side of the vehicle, and a steering drive (8), characterized in that each hydrostatic travel-drive consists of at least one variable cc pump (3a, 3b) feeding, via a fluid distribution circuit, each respectively at least one first hydraulic motor (4a, 4b) and at least one variable cc motor pump (5a, 5b) installed respectively on either side of the vehicle, each first motor respectively (4a, 4b) of each travel-drive being linked mechanically to each motor pump (respectively 5b, 5a) of the travel-drive located on the opposite side on the vehicle.

2. Propulsion unit as per claim 1, characterized in that the high pressure loop of the fluid distribution circuit of each travel-drive contains at least one linear or rotary, two-position distributor position (7a, 7b), a first position feeding with fluid the motor pump (5a or 5b) of the said drive (3a, 4a or 3b, 4b) and a second position feeding the motor pump (5b or 5a) of the opposite drive.

3. Propulsion unit as per claim 2, characterized in that the distributor (7a or 7b) of each travel drive contains a control system providing for change from the first to the second position of the distributor when the cc of the motor pump of the said drive changes from a positive cc (motor operating) to a negative one (pump operating), the reverse variation in the cc entailing the change from the second to the first position of the distributor.

4. Propulsion unit according to any one of claims 1 to 3 characterized in that the steering drive consists in a variable cc pump (8) with double direction of flow drawing in the fluid in the high pressure loop in a straight line from one of the travel-drives (3a, 4a, 5a or 3b, 4b, 5b) becoming low pressure loop in turns, this drive being on the inside to deliver in the high pressure loop of the travel-drive located on the opposite side of the vehicle.

5. Propulsion unit as per claim 4 characterized in that the steering drive contains a linear or rotary, two-position distributor (9) to reverse the direction of distribution of the fluid delivered by the pump of the said drive when the vehicle is reversing.

6. Propulsion unit according to any one of claims 1 to 5, characterized in that each travel-drive contains a first motor (respectively 4a or 4b) and two motor pumps (respectively 50a, 51a or 50b, 51b) located on the opposite side of the vehicle to the first motor, one (51a, 51b) of the motor pumps being installed parallel in the hydraulic circuit on the first motor, and the other motor pump (50a, 50b) capable of being coupled parallel to the first motor of one or other of the travel-drives via a linear or rotary, two-position distributor (7a, 7b), the change from one or other of the positions being controlled by the change from a positive cc to a negative cc of the said motor pump (50a, 50b).

7. Propulsion unit according to any one of claims 1 to 5, characterized in that each travel drive contains a first motor (4a, 4b) and two motor pumps (50a, 51a and 50b, 51b) located on the side of the vehicle opposite the first motor, each motor pump being capable of being coupled parallel in the hydraulic circuit on the first motor of one or other of the travel-drives by a linear or rotary, two-position distributor (7a, 7b or 70a, 70b), the change from one or other of the positions of each distributor being controlled by the change from a positive cc to a negative cc of the corresponding motor pump.

8. Propulsion unit according to any one of claims 6 or 7 characterized in that the motor pumps of each drive are linked together and to the first motor of the other drive by a mechanical means.

9. Propulsion unit according to any one of claims 1 to 8 characterized in that the variations in cc of the variable cc pumps of each travel-drive are controlled by tachometric controls as from the speed of generation on which are superposed algebraic pressure power summation type regulations.

10. Propulsion unit according to any one of claims 1 to 9 characterized in that the cc of the variable cc motor pumps.

**Ansprüche**

1. Triebwerk mit hydrostatischer Kraftübertragung für die Translation und Lenkung mit hydraulischer Leistungsrückführung in Kurven auf schweren Kettenfahrzeugen bzw. schweren Fahrzeugen mit Antriebsrädern ohne Lenkung ; Triebwerk mit zwei hydrostatischen Translationsgetrieben (3a, 4a bzw. 3b, 4b) beiderseits des Fahrzeugs wirkend, und einem Lenkungsgetriebe (8), dadurch gekennzeichnet dass das hydrostatische Translationsgetriebe aus Zumindest einer Pumpe mit veränderlichem Hubraum (3a, 3b) besteht, welche mittels eines Medium-Verteilerkreises jeweils zumindest einen ersten Hydraulikmotor (4a, 4b) und zumindest einen Pumpenmotor mit veränderlichem Hubraum (5a, 5b) speist, wobei der Hydraulikmotor und der Pumpenmotor beiderseits des Fahrzeugs angebracht sind ; hierbei ist jeder erster Motor des jeweiligen Translationsgetriebes (4a, 4b) mechanisch mit jedem Pumpenmotor (jeweils 4a, 5b) der an der entgegengesetzten Seite des Fahrzeugs gelegenen Kraftübertragung verbunden.

2. Triebwerk laut Anspruch 1, dadurch gekennzeichnet dass die Hochdruckschleife des Medium-Verteilungskreises jedes Translationsgetriebes aus zumindest einem linearen bzw. drehenden Verteiler (7a, 7b) mit zwei Positionen besteht, wobei mit einer ersten Position der Pumpenmotor (5a bzw. 5b) dieses Getriebes (3a, 4a bzw. 3b, 4b) mit Medium gespeist werden kann, und aus einer zweiten Position mit welcher der Pumpenmotor (5b bzw. 5a) des gegenüberliegenden Getriebes gespeist werden kann.

3. Triebwerk laut Anspruch 2, dadurch gekennzeichnet dass der Verteiler (7a, 7b) jedes Translations getriebes mit einem Schaltsystem versehen ist, zum Uebergang von der ersten auf die zweite Position des Verteilers wenn der Hubraum des Pumpenmotors dieses Getriebes (bei Motorbetrieb) auf einen negativen Hubraum (bei Pumpenbetrieb) übergeht, wobei die umgekehrte Hubraumänderung von der zweiten auf die erste Position des Verteilers verursacht.

4. Triebwerk laut irgendeinem der Ansprüche 1 bis 3, dadurch gekennzeichnet dass das Lenkgetriebe aus einer Pumpe mit veränderlichem Hubraum (8), doppelter Durchlassrichtung besteht, welche das Medium in gerader Linie einer der beiden Translationsgetriebe (3a, 4a, 5a bzw. 3b, 4b, 5b), das in den Kurven zur Niederdruckschleife wird, in die Hochdruckschleife ansaugt ; dieses Getriebe befindet sich an der Innenseite, damit der Druck in die Hochdruckschleife des an der dem Fahrzeug gegenüberliegenden Seite gelegenen Translationsgetriebe eingeht.

5. Triebwerk laut Anspruch 4, dadurch gekennzeichnet dass das Lenkgetriebe aus einem linearen bzw. drehenden Verteiler (9) mit zwei Positionen besteht, mit welchem die Verteilungsrichtung des von der Pumpe dieses Getriebes bei Rückwärtsfahren des Fahrzeuges ausgegebenen Mediums umgedreht wird.

6. Triebwerk laut irgendeinem der Ansprüche 1 bis 5, dadurch gekennzeichnet dass jedes Translationsgetriebe mit einem ersten Motor (jeweils 4a bzw. 4b) und mit zwei Pumpenmotoren (jeweils 50a, 50b, 51b) versehen ist, welche sich an derjenigen Seite des Fahrzeugs befinden, die dem ersten Motor gegenüber liegt. Einer der Pumpenmotoren (51a, 51b ist parallel dem Hydraulikkreis des ersten Motors angeordnet und der andere Pumpenmotor (50a, 50b) kann parallel mit dem ersten Motor an einem oder an dem anderen der Translationsgetriebe angeschlossen werden, und zwar mit Hilfe eines linearen oder drehenden Verteilers (7a, 7b) mit zwei Positionen, wobei der Uebergang von der einen zur anderen Position durch den Uebergang vom positiven Hubraum zum negativen Hubraum dieses Pumpenmotors (50a, 50b) gesteuert wird.

7. Triebwerk laut irgendeinem der Ansprüche 1 bis 5, dadurch gekennzeichnet dass jedes Translationsgetriebe mit einem Motor (4a, 4b) und mit zwei Pumpenmotoren (50a, 51a und 50b, 51b), die sich an der in dem ersten Motor gegenüberliegenden Seite des Fahrzeugs befinden, versehen ist. Jeder Pumpenmotor kann in dem Hydraulikkreis mit dem ersten Motor an einem oder an dem anderen der Translationsgetriebe angeschlossen werden, und zwar mit Hilfe eines linearen oder drehenden Verteilers (7a, 7b bzw. 7 oa, 7 ob) mit zwei Positionen, wobei der Uebergang von der einen zur anderen Position durch den Uebergang vom positiven Hubraum zum negativen Hubraum dieses Pumpenmotors gesteuert wird.

8. Triebwerk laut irgendeinem der Ansprüche 6 oder 7, dadurch gekennzeichnet dass die Pumpenmotoren eines jeden Getriebes mechanisch miteinander und mit dem ersten Motor des übrigen Getriebes verbunden sind.

9. Triebwerk laut irgendeinem der Ansprüche 1 bis 8, dadurch gekennzeichnet dass die Hubraumänderungen der Pumpe mit veränderlichem Hubraum eines jeden Translationsgetriebes durch Tachometer-Regeleinheiten gesteuert werden, und zwar ab der Erzeugungsgeschwindigkeit, wobei diesen Tachometer-Regelwerten Regelwerte auf der Grundlage einer Algebra-Summierung der durch den Druck erzeugten Leistung überlagert werden.

10. Triebwerk laut irgendeinem der Ansprüche 1 bis 9, dadurch gekennzeichnet dass die Hubraumwerte der Pumpenmotoren mit veränderlichem Hubraum durch Tachometer-Regelwerte gesteuert werden, die sich auf der Antriebsgeschwindigkeit durch die Antriebseinheiten, denen, im Falle des Betriebes der Pumpenmotoren als Pumpe, wie vorhergehend überlagert werden, ergeben.

FIG.1

FIG.2

FIG.3

FIG.4

FIG.5

FIG.6